# FASCICULE DE BREVET EUROPEEN

(11) **EP 2 310 186 B1**
(45) Date de publication et mention de la délivrance du brevet: **19.09.2012**
(21) Numéro de dépôt: 09769478.0
(22) Date de dépôt: 26.05.2009
(51) Int. Cl.: B29C 65/00, F16L 47/00

(54) **PROCÉDÉ D'ASSEMBLAGE ORBITAL DE TRONÇONS D'AÉRONEF EN MATÉRIAU COMPOSITE**
VERFAHREN ZUR ORBITALEN MONTAGE VON FLUGZEUGABSCHNITTEN AUS VERBUNDMATERIAL
METHOD FOR THE ORBITAL ASSEMBLY OF AIRCRAFT SECTIONS MADE OF COMPOSITE MATERIAL

(30) Priorité: 02.06.2008 FR 0803009
(43) Date de publication de la demande: 20.04.2011
(73) Titulaire: AIRBUS OPERATIONS (S.A.S), 31060 Toulouse (FR)
(72) Inventeur: GALLANT, Guillaume, F-31480 Laréole (FR); LACOMBE, Jean-Claude, F-31700 Blagnac (FR)
(74) Mandataire: Fourcade, Emmanuelle
(86) Numéro de dépôt international: PCT/FR2009/050972
(87) Numéro de publication internationale: WO 2009/156637

(56) Documents cités:
- EP-A- 0 889 275
- WO-A-98/48207
- FR-A- 2 758 175
- GB-A- 1 366 139
- US-A1- 2006 060 705
- F. C. CAMPBELL: "Manufacturing processes for advanced composites" 2004, ELSEVIER , OXFORD, UK , XP002509936 ISBN: 1856174158 page 290 - page 291

## Description

L'invention s'inscrit dans le domaine des procédés d'assemblage structural notamment de structures aéronautiques telles que des éléments de fuselage ou de voilure. Plus particulièrement l'invention concerne l'assemblage d'éléments structuraux au moins partiellement constitués de matériau composite à renfort fibreux.

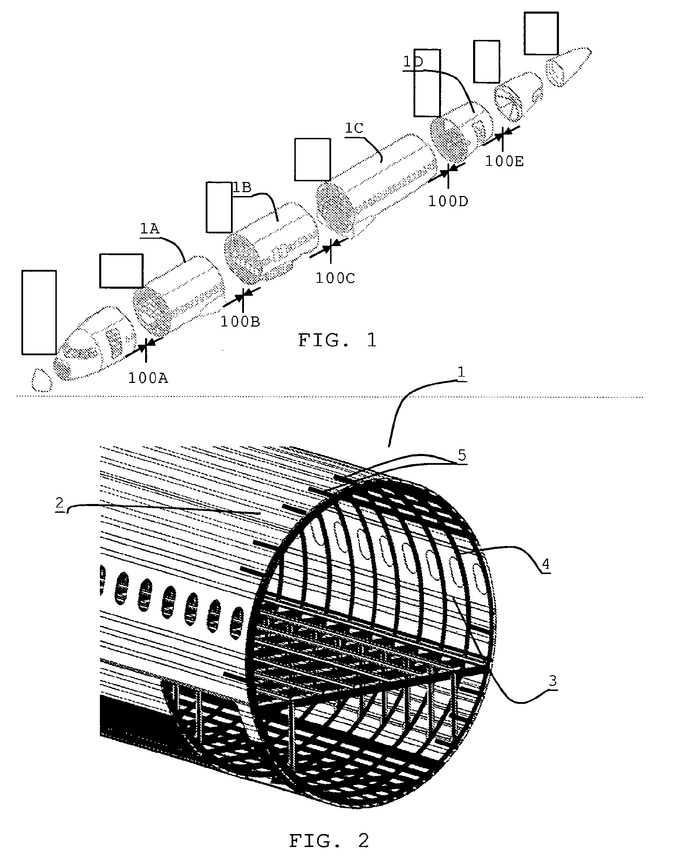

On connaît de l'art antérieur (document US 2006/060705 par exemple) l'assemblage d'éléments structuraux (1A à 1D) de forme sensiblement tubulaire telle que la jonction des tronçons de fuselage d'aéronef, comme le représente la figure 1, ou la jonction de voilures sur le caisson central dudit fuselage.

De telles jonctions (100A à 100E) sont dites orbitales, car effectuées selon le pourtour de la section des éléments à jonctionner. L'assemblage structural des éléments ainsi jonctionnés est réalisé par l'intermédiaires de fixations telles que des rivets, cette opération prenant le nom de « couture orbitale ».

Afin d'assurer la continuité mécanique de la structure ainsi assemblée, les éléments doivent être en contact intime au niveau de la jonction. Ceci implique que les deux éléments soient fabriqués avec précision de sorte qu'au niveau de l'interface de jonction les formes des deux éléments soient identiques ou parfaitement complémentaires selon que la jonction est réalisée bout à bout ou par emboîtement.

Selon cet art antérieur les éléments structuraux sont constitués de panneaux métalliques, dits « panneaux de peau » ou « peau », raidis par des raidisseurs longitudinaux, couramment appelés « lisses », et des raidisseurs périphériques, couramment dénommés « cadres ». Toujours selon l'art antérieur les lisses sont assemblées au panneau de peau par rivetage, de même que les cadres, les lisses les cadres et la peau étant également liés ensembles au niveau des cadres par des éclisses elles mêmes rivetées à ces trois éléments. Les dites éclisses sont des pièces de jonction trièdre réalisées en une seule ou plusieurs parties, par pliage ou par emboutissage.

Les panneaux raidis sont assemblés selon des coutures longitudinales afin de former un tronçon tubulaire. Tant les coutures longitudinales que l'assemblage des raidisseurs sur les panneaux de peau sont réalisés par des fixations telles que des rivets.

Afin de permettre un ajustement parfait au niveau de la jonction, les fixations des raidisseurs longitudinaux ne sont pas installées entre l'extrémité du panneau et le premier cadre, de même que la couture longitudinale entre les panneaux de peau n'est pas faite sur cette même distance.

On dispose ainsi d'une certaine souplesse qui permet d'ajuster la forme et le périmètre de l'interface de jonction d'un élément structural à celle de l'autre élément structural. On obtient ainsi le contact intime entre les deux éléments, garant de la continuité mécanique de l'assemblage.

Afin d'alléger la structure et accroître les performances des aéronefs il est connu de substituer le métal par des matériaux composites à renfort fibreux.

Ces matériaux sont utilisés notamment pour la fabrication de panneaux de peau. Les procédés de fabrication autorisés par ces matériaux permettent avantageusement d'obtenir des panneaux de plus grande dimension, ainsi un tronçon de fuselage peut par exemple être réalisé par l'assemblage de 4 panneaux selon des coutures longitudinales. Ledit tronçon de fuselage peut même être réalisé sans aucune couture longitudinale, en une seule pièce cylindrique comportant tous les raidisseurs longitudinaux et périphériques rapportés par co-cuisson, tel que décrit par exemple dans la demande de brevet US2006/060705 A1.

Selon cette constitution les éléments structuraux sont beaucoup plus rigides et ne disposent pas de la flexibilité suffisante pour encaisser les variations de forme et de périmètre entre les deux éléments à assembler au niveau des coutures orbitales. L'absence ou le nombre réduit de couture longitudinale ne permet pas non plus de donner suffisamment de flexibilité par l'absence de pose des fixations en extrémité de couture.

Les défauts de forme doivent être compensés par un calage optimisé d'un tronçon par rapport à l'autre et par des opérations de compensation locale, notamment par des ajouts de résine, opération communément dénommée « shimming ». Les défauts de périmètres sont beaucoup plus difficiles à corriger. Ainsi selon cet art antérieur, un procédé d'assemblage d'un tel élément structural avec un autre élément structural au travers d'une jonction orbitale comprend les étapes consistant à :
- mesurer les interfaces de jonction des deux éléments
- en déduire la position optimale d'un élément par rapport à l'autre
- réaliser la jonction « à blanc » entre les deux éléments, c'est à dire, en ne posant que des fixations provisoires
- mesurer les écarts entre les éléments par des cales d'épaisseur,
- en déduire un plan de « shimming » pour chaque élément
- désassembler les deux éléments, cette opération prend couramment pour nom « l'éclatement »
- réaliser le shimming
- représenter les deux éléments pour l'assemblage et réaliser l'assemblage.

Ces opérations d'éclatement et de shimming sont très pénalisantes en termes de productivité.

Il existe donc un besoin pour un procédé d'assemblage d'éléments structuraux de ce type qui soit à la fois productif et économique tout en assurant un ajustement des formes et des périmètres des éléments à l'interface de jonctionnement.

Par ailleurs les matériaux composites constituant la peau de tels éléments structuraux ne présentent pas une dureté superficielle suffisante pour autoriser un assemblage par emboîtement, assemblage qui nécessite un déplacement axial relatif d'un élément par rapport à l'autre. En effet, un tel déplacement engendrerait des frottements susceptibles d'endommager les plis situés proche de la surface de contact et ainsi d'engendrer des délaminages.

Ainsi selon l'art antérieur l'opération de jonctionnement consiste à :
- aligner les deux éléments positionnés bout à bout
- à fixer aux deux éléments une virole constituée d'au moins deux parties et recouvrant la jonction, établissant la liaison mécanique entre les éléments.

Bien entendu cette opération doit également être réalisée « à blanc » lors de l'étape visant à mesurer les défauts d'interface.

Il est connu, par exemple des demandes de brevet EP0889275A et FR2758175A ainsi que du brevet GB1366139, de réaliser des fentes longitudinales en extrémité de structures tubulaires telles que des canalisations afin de faciliter leur assemblage. De telles structures ne comprennent cependant pas de raidisseurs longitudinaux et périphériques comme par exemple les éléments structuraux constituant le fuselage d'un aéronef.

Afin de répondre à ces besoins l'invention propose, selon un premier mode de réalisation, un procédé de jonction orbitale de deux éléments structuraux, au moins l'un des deux étant de forme tubulaire et comprenant une peau en matériau composite à renfort fibreux. La capacité d'adaptation en forme et en périmètre de l'interface de jonction de cet élément est améliorée en pratiquant des fentes longitudinales réparties sur le pourtour de l'interface de jonction.

Ce type d'élément structural est généralement raidi longitudinalement par des lisses. Les dites lisses sont avantageusement liées à la peau par collage ou co-cuisson. Les fentes sont réalisées dans la peau, entre les lisses, sur une longueur suffisante pour conférer à l'interface de jonction la flexibilité adaptée pour accommoder, par le déplacement radial relatif de chaque portion située entre deux fentes, les différences de forme et de périmètre entre les interfaces de jonction des deux éléments structuraux.

Lorsque l'élément structural objet de l'invention comporte des raidisseurs périphériques sous forme de cadres, la longueur adaptée desdites fentes est au plus égale à la distance entre l'extrémité de l'élément structural et le premier cadre.

Afin d'améliorer encore la flexibilité de l'interface de jonction il est avantageux de désolidariser tout ou partie des raidisseurs longitudinaux, ou lisses, de la peau, sur une distance au moins égale à la longueur des fentes et au plus égale à la distance entre l'extrémité de l'élément structural et le premier cadre. Une fois l'assemblage effectué les raidisseurs sont à nouveau fixés à la peau par l'intermédiaire de fixations tel que des rivets.

L'homme du métier comprendra que cette réalisation est particulièrement avantageuse car elle limite voir supprime les opérations de shimming. Il constatera toutefois que la présence de ces fentes dans la peau composite pose à la fois un problème de tenue mécanique de l'assemblage, chaque fente constituant une amorce de crique susceptible de se propager dans tout l'élément structural sous l'effet de sollicitations de fatigue, et un problème d'étanchéité tant vis à vis de l'intérieur de l'élément structural, par exemple vis à vis de la pressurisation à l'intérieur d'un fuselage, que de l'extérieur vis à vis de l'humidité.

Afin de limiter ces effets négatifs les fentes doivent être les plus étroites possibles, tout en conférant suffisamment de flexibilité à la zone de jonction, et présenter un profil, particulièrement en extrémité, qui ne soit pas favorable à la concentration des contraintes et à l'initiation de criques.

A cette fin l'extrémité de la fente se termine par un rayon de raccordement égal à la moitié de la largeur de la fente. La fente peut ainsi avantageusement être réalisée par fraisage à l'aide d'une fraise dont le diamètre est égal à la largeur de la fente, ou par tronçonnage, à l'aide d'un disque dont le profil présente un rayon adapté.

Avantageusement la fente présentera une largeur comprise entre 0,005 et 0,02 fois sa longueur.

Pour parfaire l'assemblage, des éclisses sont placées de sorte à recouvrir les fentes et fixées à la peau et aux raidisseurs par des fixations telles que des rivets. Ces éclisses permettent d'une part de boucher les fentes après assemblage et d'empêcher toute propagation de criques à partir des fentes, les flux d'effort étant drainés par les éclisses vers la peau au delà de l'interface de jonction sans passer par les fentes. Afin de limiter l'ajout de masse cet éclissage se substitue aux endroits où se trouvent des fentes, à l'éclissage normalement réalisé afin de lier la peau, les lisses et les cadres. Ces éclisses spécifiques sont allongées du côté où se trouve la fente. Avantageusement la longueur de la fente est d'une demi-distance inter-cadre. Ce compromis permet de procurer suffisamment de flexibilité locale sans allonger de manière excessive les éclisses.

Selon un second mode de réalisation, des fentes sont pratiquées dans les interfaces de jonctions des deux éléments structuraux assemblés selon la jonction orbitale. Dans ce cas, afin de ne pas compromettre la rigidité mécanique de l'assemblage, les fentes de chaque élément sont disposées en quinconce de part et d'autre de la ligne centrale de jonction. La dite jonction peut être renforcée par une virole. Dans ce cas la virole peut être fixée sur un premier élément, puis le second élément glissé sur la virole, la flexibilité de l'interface d'assemblage permettant de réaliser ce glissement sans frottement par l'expansion radiale de l'interface d'assemblage de l'élément.
La figure 1 représente un exemple des différentes jonctions orbitales intervenant dans la constitution d'un fuselage d'avion.
La figure 2 représente un vue en perspective d'une interface de jonction d'un tronçon de fuselage, comprenant des fentes régulièrement réparties su son pourtour.
La figure 3 représente schématiquement la mise en oeuvre du procédé d'assemblage de deux tronçons de fuselage selon une jonction orbitale
La figure 4 représente les différentes phases d'assemblage d'une jonction orbitale selon l'invention dans une zone fortement chargée avec, figure 4A la pré-installation d'un cadre sur l'interface de jonction d'un premier tronçon, 4B, l'assemblage sur cette interface d'un second tronçon muni de fentes et 4C l'installation d'éclisses.
La figure 5 représente une partie de la jonction ainsi réalisée vue de l'intérieur du fuselage
La figure 6 est un détail d'installation des fixations dans des éclisses.

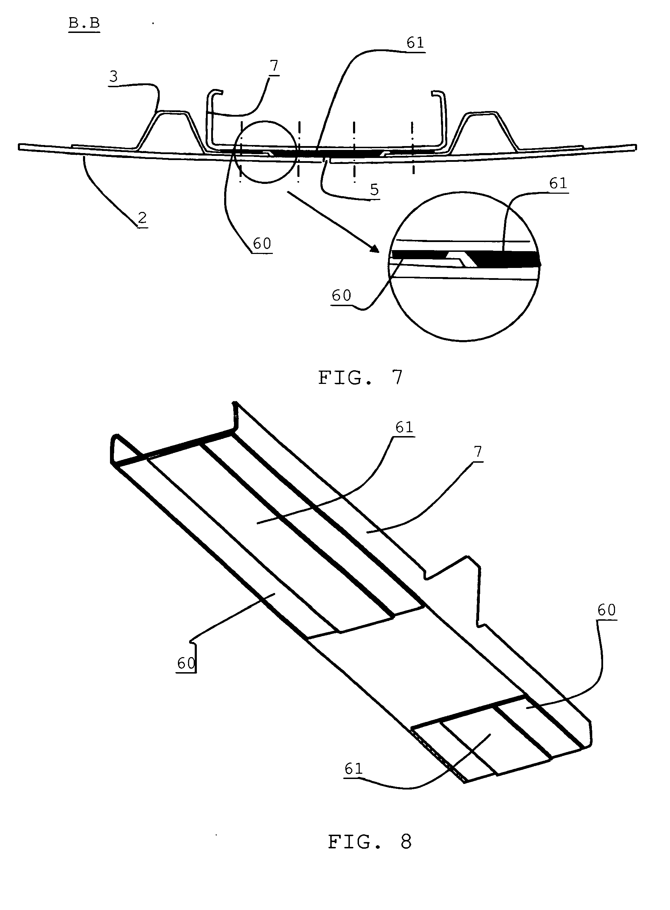

La figure 7 est une vue en coupe niveau des éclisse de la figure 5
La figure 8 est une vue en perspective des éclisse vue de dessous
La figure 9 présente une vue de l'intérieur du fuselage d'une partie de jonction orbitale d'une jonction soumise à un faible flux d'effort pour laquelle les interfaces de jonction des deux tronçons comprennent des fentes
La figure 10 (10A à 10D) est un synopsis du processus d'assemblage d'une jonction passant un faible flux d'effort au moyen d'une virole

L'invention est ici décrite dans le cas de l'assemblage de tronçons de fuselage. L'homme du métier adaptera facilement ces enseignements techniques à tout type de jonction orbitale de forme circulaire ou non pour laquelle une adaptation précise des interfaces de jonction tant en forme qu'en périmètre est nécessaire. A titre d'exemple non limitatif il peut s'agir de la jonction de la voilure au fuselage.

Il est à noter que l'invention peut avantageusement s'appliquer même dans les cas de jonctions orbitales de tronçons métalliques selon l'art antérieur.

La figure 1 est un exemple de localisation des jonctions orbitales (100A à 100E) dans la constitution d'un fuselage d'aéronef à partir de tronçons tubulaires (1A à 1D).

De tels tronçons (1), figure 2, comprennent une peau (2) raidie par des raidisseurs longitudinaux (3), ou lisses, et des raidisseurs périphériques (4) ou cadres.

Ces cadres sont répartis régulièrement sur la longueur du tronçon selon un pas inter-cadre défini. Typiquement ce pas inter-cadre est compris entre 500mm et 700mm.

Selon l'invention, des fentes (5), s'étendant longitudinalement, sont réparties sur le pourtour du tronçon à l'extrémité de celui-ci, de sorte à procurer à cette extrémité la flexibilité nécessaire pour qu'elle puisse s'adapter en forme et en périmètre à la jonction avec l'autre tronçon objet de la jonction orbitale. Avantageusement la fente présentera une largeur de 4mm pour une longueur égale à la moitié de la distance inter-cadre.

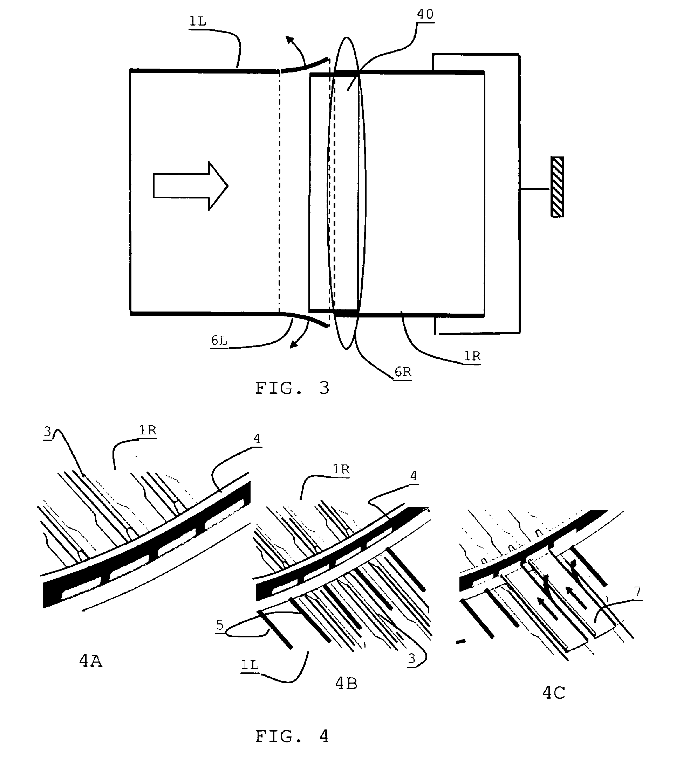

Le principe général du procédé d'assemblage, représenté figure 3, comprend les étapes consistant à fixer à l'interface de jonction (6R) d'un premier tronçon (1R) un élément intermédiaire d'assemblage (40). Cet élément intermédiaire peut être un cadre ou un raidisseur périphérique situé à l'extrémité du tronçon (1R) ou une virole, lorsque la jonction se situe dans un inter-cadre.

L'interface de jonction (6L) de l'autre tronçon à assembler (1L) est expansée de manière à pouvoir glisser sans frottement ladite interface sur l'élément intermédiaire (40). Une fois atteinte la position longitudinale adéquate, l'expansion est relâchée et l'assemblage est réalisé.

Pour décrire avec de plus amples détails ce mode de réalisation, deux cas de jonction sont à considérer, selon que la jonction orbitale est soumise à un flux d'effort important, notamment en flexion, principalement pour les jonctions situées de part et d'autre du caisson central de voilure (100B, 100C), ou à un chargement moindre pour les autres jonctions.

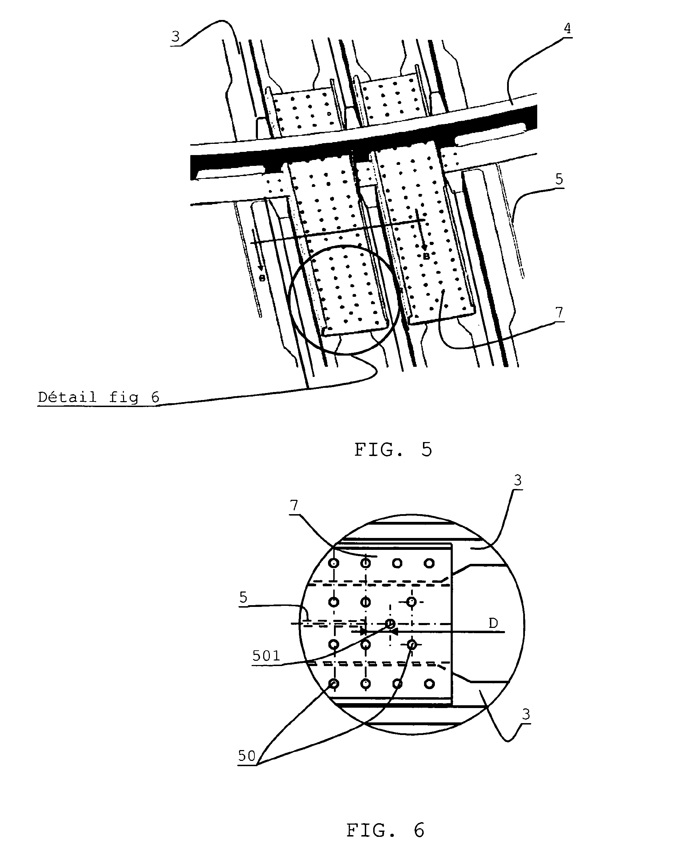

Dans le premier cas, figure 4, le cadre (4) est pré-installé à l'extrémité du premier tronçon (1R), figure 4A. Figure 4B, le second tronçon (1L), présentant des fentes (5) est présenté, glissé et ajusté sur le cadre (4) fixé à l'extrémité du premier tronçon (1R). Figure 4C, l'assemblage a lieu par la pose des fixations entre le cadre (4) et le second tronçon (1L). La jonction est renforcée par des éclisses (7) qui solidarisent le cadre (4), les peaux des deux tronçons et les lisses en vis à vis des deux tronçons (1R, 1L) . Ces éclisses (7) recouvrent la fente (5) du côté du second tronçon (1L). Les figures 5 et 6 donnent le détail de l'installation des éclisses et de leur fixation.

Les éclisses (7) sont elles mêmes solidarisées à la peau, au cadre (4) et aux lisses (3) par des fixations de type rivets (50). De telles fixations sont installées dans des trous contre percés au moment de l'assemblage. La nature de ces fixations de type rivet ou « lockbolt » permet un assemblage sans jeu dans les trous contre percés et l'installation d'une tension selon l'axe desdites fixations. La coopération entre les éclisses (7) et les fixations (50) draine les flux d'effort sans que ceux-ci ne sollicitent les fentes (5) en ouverture et conduisent ainsi à la propagation de fissures depuis ces fentes sous l'effet des sollicitations de services auxquelles est soumise la structure.

Afin de compenser les écarts de hauteur entre les pieds de lisses, la face interne de la peau et l'épaisseur du pied de cadre, des patchs (60,61) sont installés sous les éclisses. Lesdits patchs sont avantageusement constitués d'une plaque composite d'épaisseur appropriée rapportée sous l'éclisse par co-cuisson ou par collage.

Par l'intermédiaire de ces patchs, qui permettent un contact parfait entre, les éclisses, les différentes surfaces et les fixations (50), l'étanchéité de la jonction est assurée les fentes étant elles mêmes remplies de mastic d'étanchéité après l'assemblage.

La présence de ces patch permet également d'accroître localement la résistance des éclisses afin de supporter la tension installée par les fixations.

Afin d'assurer cette étanchéité mais également d'éviter la propagation de fissures depuis les fentes (5), il est avantageux de placer une fixation (501) à une distance (D) comprise entre une et 3 fois le diamètre de la fixation dans l'axe des fentes, préférentiellement à 3 fois le diamètre de la fixation. Ainsi pour une distance inter cadre de 625mm et un pas entre lisses de 178 mm les fentes présenteront une largeur de 4 mm pour une longueur d'une demi distance inter cadre associées à des fixations de diamètre normalisé 4,8mm. La fixation placée dans le prolongement de l'axe médian de la fente sera installée à une distance de 14,4mm comprise entre l'extrémité de la fente et le centre de ladite fixation.

Afin de faciliter l'assemblage et de procurer plus d'élasticité à l'interface d'assemblage en présence d'un fuselage composite dont les lisses (3) sont liées à la peau (2) par co-cuisson, il est avantageux que les lisses soient désolidarisées de la peau sur une distance maximale équivalente à une distance inter cadre. Cette désolidarisation est obtenue en interposant avant la co-cuisson un film entre les lisses et la peau, ledit film empêchant toute adhésion entre les deux éléments (3,2). Un film constitué de deux films co-laminés respectivement en polyéthylène et en polyester d'une épaisseur de l'ordre de 70µm permet d'éviter toute adhésion sans entraîner de déformation des lisses. La zone non adhérente est assemblée à la peau par rivetage au travers des éclisses (7) lors de l'assemblage.

De tels films sont disponibles commercialement sous la dénomination « PEPOLIT® 50/20 » auprès de la firme « EFFIGIDI International ».

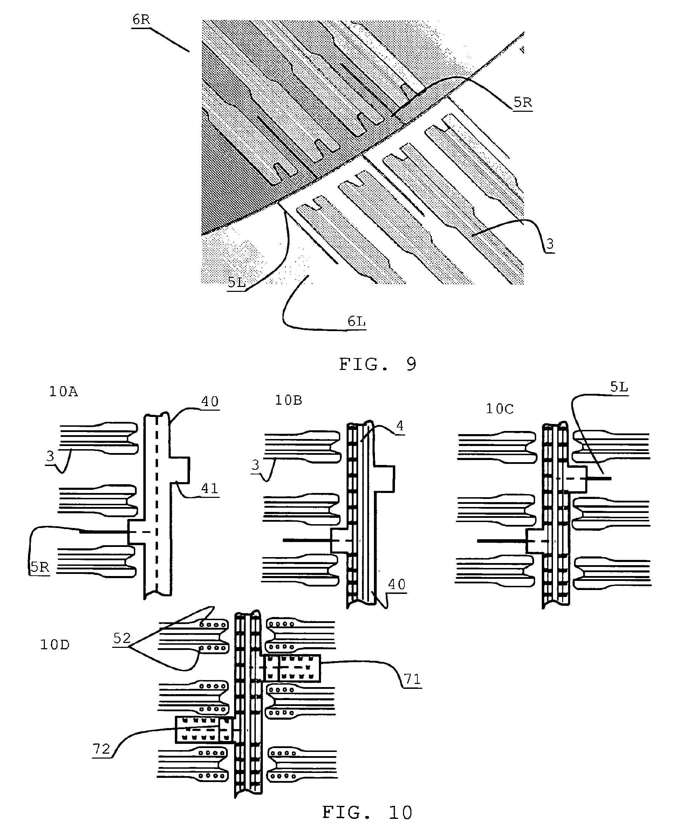

Lorsque la jonction est soumise à des flux d'efforts moins intenses, la facilité d'assemblage peut encore être améliorée en pratiquant des fentes (5L,5R) sur les deux tronçons à assembler. Dans ce cas les fentes en vis à vis sont préférentiellement disposées en quinconce de manière à procurer à la fois une adaptabilité de forme et une résistance mécanique de l'assemblage optimale, figure 9. Comme précédemment, avantageusement, les lisses (3) sont désolidarisées de la peau sur une certaine distance inférieure à une distance inter cadre en partant de l'interface d'assemblage. Elles seront à nouveau fixées à la peau, cette fois ci sans l'intermédiaires des éclisses, par des fixations (51) de type rivet. Selon ce mode de réalisation, figure 10, une virole (40) est installée sur le premier tronçon et fixée par l'intermédiaire de fixations de type rivet. Une telle virole présente des extensions (41) aptes à recouvrir au moins partiellement les fentes situées sur les deux tronçons ou sur seulement l'un d'entre eux selon que la solution utilise des fentes de part et d'autre de la jonction ou non (figure 10A). Une telle virole peut alors se présenter sous la forme d'une seule pièce de forme sensiblement circulaire correspondant à la forme de l'interface de jonction ou, si elle est constituée de plusieurs tronçons, être préalablement assemblée.

Un cadre enjambant l'interface d'assemblage (40) est installé sur ce même tronçon et fixé à la fois à la peau de ce tronçon et à la virole (40) par des fixations de type rivet (figure 10B).

Le second tronçon est glissé sur la virole, ses propres fentes (5L) permettant d'une part de s'adapter à la forme de la virole (40) et du cadre(4), et d'autre part d'expanser l'interface d'assemblage afin d'éviter tout frottement lors de ce glissement. La virole (40) et le cadre (4) sont liés par rivetage à ce second tronçon (figure 10C). Les parties de lisses initialement désolidarisées sont liées à la peau par des fixations de type rivets (figure 10D). Si les extensions (41) de la virole (40) ne couvrent pas la totalité de la longueur des fentes (5L,5R), des éclisses (71) sont disposées et fixées à la peau et aux extensions (41) de la virole (40) par des fixations de type rivets. Dans ce mode de réalisation, où les flux d'efforts sont plus faibles, les éclisses (71) sont de réalisation plus simples et ne nécessitent pas de présenter une inertie importante en flexion. Elles se présentent donc comme des plaques présentant un soyage (72) ou un épaulement, pour compenser la différence de hauteur entre la peau et le bord des extensions (41) de la virole. De telles éclisses sont fixées uniquement sur la peau et ne recouvrent pas les pieds de lisses (3). Comme précédemment la fixation de ces éclisses à la peau comprendra une fixation située à une distance comprise entre une et trois fois le diamètre de ladite fixation depuis l'extrémité de la fente dans le prolongement de l'axe médian de ladite fente.

## Revendications

1. Procédé de jonction orbitale de deux éléments structuraux (1L,1R, 1A, 1B, 1C, 1D) dont l'un au moins, de forme sensiblement tubulaire, est constitué d'un matériau composite à renfort fibreux comportant des raidisseurs longitudinaux (3) liés à la peau dudit élément de forme tubulaire par co-cuisson et au moins un raidisseur périphérique (4) lié à ladite peau (2) préalablement à l'opération de jonction **caractérisé en ce que** les raidisseurs longitudinaux (3) sont désolidarisés localement de la peau (2) préalablement à l'opération de jonction en partant de l'extrémité de l'interface de jonction et sur une distance inférieure ou égale à celle séparant cette extrémité du premier raidisseur périphérique (4) et qu'il comprend une étape consistant à pratiquer dans la peau (2) de l'interface de jonction (6L,6R) dudit élément tubulaire une pluralité de fentes (5) réparties sur le pourtour de l'interface de jonction (6L,6R) et s'étendant longitudinalement entre deux raidisseurs longitudinaux sur une distance inférieure ou égale à la distance comprise entre l'extrémité dudit élément structural et ledit raidisseur périphérique (4).

2. Procédé selon la revendication 1 **caractérisé en ce que** les raidisseurs longitudinaux (3) sont localement désolidarisés de la peau (2) dans l'interface de jonction par l'interposition locale d'un film apte à empêcher la liaison entre la peau et le raidisseur lors de l'opération de co-cuisson et ré-assemblés à la peau après le jonctionnement par la pose de fixations de type rivet (50,52,501).

3. Procédé selon la revendication 2 **caractérisé en ce qu'**il comprend une étape suivant l'étape de jonction des éléments et consistant à fixer à la peau (2) et aux raidisseurs longitudinaux (3) et entre lesdits raidisseurs longitudinaux de l'élément tubulaire des éclisses (7,71) recouvrant chaque fente (5).

4. Procédé selon la revendication 3 **caractérisé en ce que** l'extrémité des fentes (5) est de forme semi circulaire de rayon égal à une demi largeur de fente(5).

5. Procédé selon la revendication 4 **caractérisé en ce qu'**au moins une fixation (501) est placée entre l'éclisse (7,71) et la peau (2) dans l'axe médian de la fente (5) à une distance (D) comprise entre l'extrémité de la fente (5) et le centre de la fixation (501) comprise entre 1 et 3 fois le diamètre de ladite fixation.

6. Procédé de jonction orbitale de deux éléments structuraux de forme sensiblement tubulaire (1L,1R) **caractérisé en ce que** les deux éléments structuraux comportent des fentes (5L,5R) selon l'une quelconque des revendications précédentes disposées en quinconce selon le pourtour de l'interface d'assemblage.

7. Procédé de jonction orbitale selon la revendication 6 **caractérisé en ce que** la liaison entre les deux éléments (1L, 1R) est réalisée par l'intermédiaire d'une virole (40).

8. Procédé de jonction orbitale selon la revendication 7 **caractérisé en ce que** la virole (40) comprend au moins une extension (41) couvrant en partie ou en totalité au moins une fente (5R, 5L) d'au moins un des éléments structuraux (1L, 1R).

## Claims

1. A method for orbital junction of two structural members (1 L, 1 R, 1A, 1 B, 1C,1D) of which at least one being substantially tube-shaped, made of a fiber-reinforced composite material and having longitudinal stiffeners (3) bonded to the skin of the said tube-shaped member by co-baking, and at least one peripheral stiffener (4) bonded to said skin (2) prior to the junction operation, **characterized in that** the longitudinal stiffeners (3) are locally disjoined from the skin (2) prior to the junction opération starting from the end of the junction interface continuing over a distance shorter or equal to that separating this end from the first peripheral stiffener (4) and **in that** it includes a step consisting in making a plurality of slots (5) in the skin (2) of the junction interface (6L, 6R) of the said tube-shaped member that are distributed on the circumference of the junction interface (6L, 6R) and that extend longitudinally between two stiffeners over a distance shorter or equal to the distance between the end of the said structural member and the said peripheral stiffener (4).

2. A method according to claim 1 wherein the longitudinal stiffeners (3) are locally disjoined from the skin (2) in the junction interface by the local interposition of a film capable of preventing bonding between the skin and the stiffener during the co-baking operation and are re-assembled with the skin after joining by the installation of rivet-type fasteners (50, 52, 501).

3. A method according to claim 2 wherein it comprises a step following the step of junction of the members and consisting in fastening, to the skin (2) and to the longitudinal stiffeners (3) and between said stiffeners of the tube-shaped members, splices (7, 71) covering each slot (5).

4. A method according to claim 3 wherein the end of the slots (5) is of a semicircular shape with a radius equals to one half of the width of the slot (5).

5. A method according to claim 4 wherein at least one fastener (501) is situated between the splice (7, 71) and the skin (2) in the median axis of the slot (5) at a distance (D) between the end of the slot (5) and the center of the fastener (501) comprising between 1 and 3 times the diameter of the said fastener.

6. A method for orbital junction of two substantially tube-shaped structural members (1L, 1R) wherein the two structural members have slots (5L, 5R) according to any one of the preceding claims, arranged in staggered rows following the periphery of the junction interface.

7. A method for orbital junction according to claim 6 wherein the link between the two members (1L, 1R) is achieved by means of a ferrule (40).

8. A method for orbital junction according to claim 7 wherein the ferrule (40) includes at least one extension (41) partially or totally covering at least one slot (5R, 5L) of at least one of the structural members (1L, 1R).

## Patentansprüche

1. Verfahren zur Umfangsverbindung von zwei Strukturbauteilen (1 L, 1 R, 1A, 1 B, 1C, 1D), von denen zumindest ein in etwa rohrförmig ausgeführtes Teil aus einem Verbundwerkstoff mit einer faserigen Versteifung umfassend Längsverstrebungen (3) gefertigt ist, die durch Vulkanisieren mit der Außenhaut des besagten rohrförmig ausgeführten Teils verbunden ist, und zumindest eine Umfangsverstrebung (4), die vor dem Verbindungsvorgang mit der besagten Außenhaut (2) verbunden wird, **dadurch gekennzeichnet, dass** die Längsverstrebungen (3) vor dem Verbindungsvorgang ausgehend vom Ende der Verbindungsschnittstelle, und auf einer Länge kleiner oder gleich jener Länge lokal von der Außenhaut (2) gelöst werden, die dieses Ende von der ersten Umfangsverstrebung (4) trennt, und es einen Schritt umfasst, der darin besteht, in die Außenhaut (2) der Verbindungsschnittstelle (6L, 6R) des besagten rohrförmig ausgeführten Teils eine Vielzahl von Schlitzen (5) einzuarbeiten, die über den Umfang der Verbindungsschnittstelle (6L, 6R) verteilt sind, und sich längs zwischen zwei Längsverstrebungen auf einer Länge kleiner oder gleich dem Abstand zwischen dem Ende des besagten Strukturbauteils und der besagten Umfangsverstrebung (4) erstreckt.

2. Verfahren nach Anspruch 1, **dadurch gekennzeichnet, dass** die Längsverstrebungen (3) in der Verbindungsschnittstelle durch das lokale Einfügen einer Folie lokal von der Außenhaut (2) gelöst werden, die in der Lage ist, die Verbindung zwischen der Außenhaut und der Versteifung beim Vulkanisierungsvorgang zu verhindern, und die nach der Verbindung durch das Anbringen von Befestigungen in der Art von Nieten (50, 52, 501) mit der Außenhaut zusammengefügt werden.

3. Verfahren nach Anspruch 2, **dadurch gekennzeichnet, dass** es einen Schritt nach dem Schritt zur Verbindung der Bauteile umfasst, und der darin besteht, an der Außenhaut (2) und an den Längsverstrebungen (3) und zwischen den besagten Längsverstrebungen des rohrförmig ausgeführten Teils Laschen (7, 71) zu befestigen, die jeden Schlitz (5) abdecken.

4. Verfahren nach Anspruch 3, **dadurch gekennzeichnet, dass** das Ende der Schlitze (5) eine Halbkreisform aufweist, deren Radius gleich einer halben Schlitzbreite (5) ist.

5. Verfahren nach Anspruch 4, **dadurch gekennzeichnet, dass** zumindest eine Befestigung (501) zwischen der Lasche (7, 71) und der Außenhaut (2) in der Mittelachse des Schlitzes (5) in einem Abstand (D) zwischen dem Ende des Schlitzes (5) und der Mitte der Befestigung (501) angeordnet ist, die 1 bis 3 Mal dem Durchmesser der besagten Befestigung entspricht.

6. Verfahren zur Umfangsverbindung von zwei in etwa rohrförmig ausgeführten Strukturbauteilen (1 L, 1 R), **dadurch gekennzeichnet, dass** die beiden Strukturbauteile Schlitze (5L, 5R) nach irgendeinem der vorherigen Ansprüche umfassen, die versetzt über den Umfang der Verbindungsschnittstelle angeordnet sind.

7. Verfahren zur Umfangsverbindung nach Anspruch 6, **dadurch gekennzeichnet, dass** die Verbindung zwischen den beiden Bauteilen (1L, 1R) durch einen Ringbeschlag (40) erfolgt.

8. Verfahren zur Umfangsverbindung nach Anspruch 7, **dadurch gekennzeichnet, dass** der Ringbeschlag (40) zumindest eine Erweiterung (41) umfasst, die zumindest einen Schlitz (5L, 5R) von zumindest einem der Strukturbauteile (1 L, 1 R) teilweise oder vollständig abdeckt.
